# EUROPÄISCHE PATENTSCHRIFT

(11) **EP 1 299 443 B1**
(45) Veröffentlichungstag und Bekanntmachung des Hinweises auf die Patenterteilung: **28.12.2005**
(21) Anmeldenummer: 01960290.3
(22) Anmeldetag: 08.06.2001
(51) Int. Cl.: C08G 18/00

(54) **VERFAHREN ZUR HERSTELLUNG VON BLOCKSCHAUM**
METHOD FOR THE PRODUCTION OF BLOCK FOAM
PROCEDE DE PRODUCTION D'UNE PLAQUE DE MOUSSE

(30) Priorität: 21.06.2000 DE 10030384
(43) Veröffentlichungstag der Anmeldung: 09.04.2003
(73) Patentinhaber: Hennecke GmbH, 51379 Leverkusen (DE)
(72) Erfinder: SULZBACH, Hans-Michael, 53639 Königswinter (DE); RAFFEL, Reiner, 53721 Siegburg (DE); SCHAMBERG, Martin, 53773 Hennef (DE)
(74) Vertreter: Feldhues, Michael L.F.
(86) Internationale Anmeldenummer: PCT/EP2001/006524
(87) Internationale Veröffentlichungsnummer: WO 2001/098389

(56) Entgegenhaltungen:
- WO-A-96/02376
- DE-A- 4 425 317
- US-A- 5 883 143

## Beschreibung

Die vorliegende Erfindung betrifft ein Verfahren zur Herstellung von Polyurethan-Blockschaum unter Einsatz von Kohlendioxid als Treibmittel.

Bei derartigen Verfahren wird vorzugsweise flüssiges Kohlendioxid mit vorzugsweise einer der Komponenten, insbesondere der Polyolkomponente, unter Druck vermischt, anschließend die Kohlendioxid gelöst enthaltende Komponente in eine Mischkammer eingeleitet, in der diese mit der anderen Komponente, typischerweise der Isocyanatkomponente, und weiteren Hilfsstoffen vermischt wird. Zur Erzeugung eines gleichmäßigen Schaumes ist es erforderlich, den Druck der Kohlendioxid gelöst enthaltenden Polyol-Isocyanat-Mischung plötzlich auf Normaldruck herabzusetzen, so dass in der Mischung möglichst gleichmäßig eine große Zahl von Blasenkeimen gebildet wird, die zu gleichmäßigen Schaumblasen heranwachsen. Der so erhaltene Flüssigschaum wird auf einem Transportband abgelegt, wo er gegebenenfalls aufgrund der Gegenwart weiterer Schäummittel weiter aufschäumt und ferner aushärtet. Als weiteres Schäummittel kommt insbesondere Wasser, das durch Reaktion mit dem Isocyanat Kohlendioxid bildet, in Frage.

Gemäß einer Reihe von Vorschlägen der Anmelderin (EP-A 767 728, EP-A 777 564 und EP-A 794 857) erfolgt die Druckentspannung dadurch, dass die kohlendioxid-haltige Polyol-Polyisocyanat-Mischung durch mehrere, hintereinandergeschaltete Siebe oder Lochplatten mit einer Vielzahl von Durchtrittsöffnungen mit Durchmessern in der Größenordnung von 100 µm gedrückt wird. Typischerweise weisen derartige Siebplatten mehrere 10 000 Bohrungen bzw. Durchgangslöcher auf. Dadurch, dass die Siebe bzw. Siebplatten eng benachbart angeordnet sind, erfolgt die Druckentspannung innerhalb sehr kurzer Zeiträume, wobei jeder der mehreren 10 000 durch die Siebplatte hindurchtretenden Ströme der Polyol-Polyisocyanat-Mischung hohe Schergeschwindigkeiten erfährt, wobei eine hohe und gleichmäßige Blasenkeimdichte von mehreren 100 000 Blasenkeimen pro cm³ in der Mischung erzeugt wird. Aufgrund der durch Druckreduktion erzeugten Übersättigung der Mischung wird eine entsprechende Zahl sehr gleichmäßiger Schaumblasen erzeugt. Die Anzahl der einzusetzenden Siebplatten, die Größe der Durchgangslöcher und der gesamte freie Querschnitt der Siebplatten werden in Abhängigkeit von der herzustellenden Schaumqualität (Kohlendioxidgehalt der Mischung, Schaumdichte, Druck vor der Entspannung) ausgewählt. Eine Variation der Schaumqualität während des laufenden Betriebes, d.h. ohne Austausch von Siebplatten, ist nur begrenzt möglich. Ferner besteht aufgrund des geringen Durchmessers der Sieblöcher das Risiko, dass diese während längerer Betriebszeiten durch in der Polyol-Isocyanat-Mischung vorhandene feine Feststoffpartikel zugesetzt werden.

Ein noch ungelöstes Problem ist die Herstellung füllstoffhaltiger Schäume. Selbst feinstteilige Füllstoffe mit Teilchengrößen von typischerweise 10 µm führen aufgrund der Agglomerationsneigung der Füllstoffteilchen zur Verstopfung der Siebe.

Aufgabe der vorliegenden Erfindung ist es, die Blasenkeimbildung in der Polyol-Isocyanat-Mischung so zu verbessern, dass ein Einsatz feinporiger Siebe nicht erforderlich ist und ferner den Einsatz von Füllstoffen in mit Kohlendioxid geschäumten Polyurethan-Schaumstoffen zu ermöglichen.

Insbesondere ist es eine Aufgabe der Erfindung, ein Verfahren zur Herstellung von Polyurethan-Schäumen unter Einsatz von Kohlendioxid als Schäummittel bereitzustellen, bei dem der Druck vor der Entspannung auf Normaldruck minimal ist, d.h. bei dem an das Druckhaltevermögen des Schäumorgans (die Siebplatten bzw. Siebe nach den früheren Vorschlägen) minimale Anforderungen gestellt werden können.

Nach den obengenannten früheren Vorschlägen erfolgte die Blasenkeimbildung beim Durchtritt der Polyol-Isocyanat-Mischung durch das Druckhalteorgan. Zur Blasenkeimbildung ist neben einer Übersättigung der Mischung an Kohlendioxid (d.h. der herrschende Druck liegt unterhalb des Gleichgewichtslösungsdruckes) die Erzeugung hoher Schergeschwindigkeiten erforderlich. Diese hohen Schergeschwindigkeiten treten lediglich im Randbereich der Durchtrittsöffnungen durch das Druckhalteorgan auf Zur Erzeugung einer hinreichend großen homogenen Blasenkeimzahl war es daher erforderlich, entweder die Durchtrittsöffnungen sehr eng zu wählen, beispielsweise Durchmesser von 50 µm oder weniger vorzusehen, oder aber durch Gestaltung des Druckhalteorgans in Form einer Packung aus mehreren Siebplatten der Mischung mehrfach wechselnd hohe Schergeschwindigkeiten aufzuprägen. So gelingt es, bei Sieblochdurchmessern von 100 bis 120 µm mit 5 bis 7 gestapelten Sieben einen hochwertigen Schaum herzustellen. Sowohl sehr feine Sieblochdurchmesser als auch eine große Zahl von gestapelten Sieben stehen jedoch einer Mitverwendung von Füllstoffen in der Polyol-Isocyanat-Mischung entgegen. Versuche, Siebplatten mit Sieblochdurchmessern von etwa 200 µm einzusetzen, haben bei im Hinblick auf die Verweilzeit der Mischung in dem Druckhalteorgan vertretbarer Anzahl von gepackten Sieben regelmäßig zu unter heutigen Bedingungen kommerziell nicht mehr verwertbaren Schaumqualitäten geführt.

Es wurde gefunden, dass es gelingt, in Polyol, das Kohlendioxid gelöst enthält, eine ausreichende Zahl von Blasenkeimen zu erzeugen, wenn das Polyol beim Durchgang durch eine Düse einen ausreichend hohen Druckverlust erleidet. Die Anzahl der gebildeten Blasenkeime ist abhängig von dem Druckverlust beim Durchgang durch die Düse. Eine für die Polyurethan-Schaumherstellung ausreichende Anzahl von Blasenkeimen wird erzeugt, wenn der Druckverlust beim Durchgang durch die Düse mindestens dem 5-fachen Gleichgewichtslösungsdruck des gelösten Kohlendioxids entspricht. Die zugrundeliegenden Experimente wurden an Polyol durchgeführt. Dasselbe gilt für Isocyanat und für die Polyol-Isocyanat-Mischung.

Unter Nutzung dieser Beobachtungen gelingt es, die Blasenkeimbildung von der Druckentspannung auf Normaldruck zu entkoppeln.

Gegenstand der vorliegenden Erfindung ist demgemäss ein Verfahren zur Herstellung von Polyurethan-Blockschaum, wobei eine Kohlendioxid enthaltende Polyurethan-Reaktivmischung plötzlich von einem Druck oberhalb des Gleichgewichtslösungsdruckes des Kohlendioxids auf Normaldruck entspannt wird, wobei die flüssige Polyurethan-Reaktivmischung unter Freisetzung von gelöstem Kohlendioxid aufschäumt, die aufgeschäumte Mischung auf ein Substrat aufgebracht wird und anschließend zum Blockschaum ausgehärtet wird, das dadurch gekennzeichnet ist, dass das Kohlendioxid zunächst bei einem wesentlich oberhalb des Gleichgewichtslösungsdruckes liegenden Druck in der Reaktivmischung oder mindestens einer der Komponenten Polyol und Isocyanat vollständig gelöst wird, der Druck anschließend auf einen Druck nahe des Gleichgewichtslösungsdruckes herabgesetzt wird, wobei zwischenzeitlich der Gleichgewichtslösungsdruck unter Freisetzung geringer Mengen des Kohlendioxids unter Bildung einer Blasen-Mikrodispersion unterschritten wird, gegebenenfalls die Kohlendioxid-haltige Komponente mit der anderen Komponente vermischt wird, und die plötzliche Druckherabsetzung auf Normaldruck erfolgt, ohne dass das freigesetzte Kohlendioxid wieder vollständig aufgelöst ist.

Die Größe des wesentlich oberhalb des Gleichgewichtslösungsdruckes liegenden Druckes vor der ersten Druckreduktion bestimmt die Anzahl der bei der ersten Druckreduktion erzeugten Blasenkeime. Für die Erzeugung eines gleichmäßigen, feinblasigen Blockschaumes ist es erforderlich, in Abhängigkeit von dem Anteil an gelöstem CO₂ etwa 100 000 bis 200 000 Blasenkeime pro cm³ flüssiger Polyol-Polyisocyanat-Michung zu erzeugen. Dies gelingt im allgemeinen, wenn der Druck vor der ersten Druckreduktion oberhalb des 5-fachen des Gleichgewichtslösungsdruckes des gelösten Kohlendioxids liegt. Vorzugsweise soll der Druck vor der ersten Druckreduktion zwischen dem 8- und 15-fachen des Gleichgewichtslösungsdruckes des gelösten Kohlendioxids liegen. Abgesehen von technologischen Schwierigkeiten der Druckbeherrschung besteht hinsichtlich des Druckes nach oben keine Begrenzung: Je höher der Druck, desto feinblasiger ist der erhaltene Blockschaum.

Im Prinzip ist es möglich, die erste Druckreduktion im Anschluss an die Vermischung von Polyol, Isocyanat und Kohlendioxid vorzunehmen. Allerdings ist es dann erforderlich, das Mischaggregat für die Vermischung von Polyol und Isocyanat bei dem hohen Druck zu betreiben.

Vorzugsweise wird daher das Kohlendioxid in der Polyol-Komponente bei hohem Druck gelöst, und die Kohlendioxid-haltige Polyol-Komponente unter Druckreduktion in die Mischkammer zur Vermischung mit dem Isocyanat eingebracht. Die Druckreduktion kann beim Durchgang durch ein einfaches Druckreduktionsventil, vorzugsweise in Form eines regelbaren Nadelventils, erfolgen. Aufgrund der hohen Geschwindigkeit beim Durchgang durch das Ventil wird der Druck der Polyol-Kohlendioxid-Mischung kurzzeitig unter den Gleichgewichtslösungsdruck herabgesetzt, wobei durch die gleichzeitig erzeugten hohen Schergeschwindigkeiten Blasenkeime erzeugt werden.

Der Mischkammerdruck wird nahe bei dem Gleichgewichtslösungsdruck des Kohlendioxids in der Polyol-Isocyanat-Mischung gehalten. Durch die Vermischung des Kohlendioxid-haltigen Polyols mit dem Isocyanat wird die Kohlendioxid-Konzentration durch die Vermischung im Verhältnis der Mischungskomponenten herabgesetzt. Das Kohlendioxid-haltige Polyol, das in die Mischkammer eingedüst wird, befindet sich bis zur Vermischung mit dem Isocyanat eine hinreichende Zeit zur Ausbildung stabiler Blasenkeime unterhalb des Gleichgewichtslösungsdruckes von Kohlendioxid in Isocyanat. Es ist also an Kohlendioxid übersättigt. Typischerweise ist für die Ausbildung stabiler Blasenkeime, d.h. von Blasenkeimen, die einen ausreichenden Durchmesser besitzen, so dass sie aufgrund der Oberflächenspannung nicht zur Wiederauflösung neigen, ein Zeitraum von 10⁻⁴ bis 10⁻² sec erforderlich.

Im Falle, dass die erste Druckreduktion nach Vermischung von Polyol und Isocyanat erfolgt, ist dafür Sorge zu tragen, dass der Gleichgewichtslösungsdruck hinreichend lange unterschritten wird. Dies kann durch entsprechend gestaltete Lavalldüsen erreicht werden.

Nach der ersten Druckentspannung soll der Druck möglichst nahe am Gleichgewichtslösungsdruck des gelösten Kohlendioxids in der Polyol-Isocyanat-Mischung liegen, d.h. so wenig oberhalb des Gleichgewichtslösungsdruckes, dass eine Wiederauflösung der Blasenkeime vermieden wird und so wenig unterhalb des Gleichgewichtslösungsdruckes, dass ein Blasenkeimwachstum zu Blasengrößen, die zur Koagulation neigen, vermieden wird.

Vorzugsweise soll der Gleichgewichtslösungsdruck um weniger als eine Druckdifferenz Δp in bar von 0,5/t überschritten worden, wobei t die Zeit in Sekunden bezeichnet, die zwischen der ersten und zweiten Druckherabsetzung verstreicht Die erforderliche Zeit zwischen der ersten Druckreduktion und der zweiten Druckreduktion ist durch das Apparatevolumen (Mischkammer und Rohrleitungen) zwischen dem ersten und zweiten Druckherabsetzungsorgan und der Durchsatzmenge an Polyol-Polyisocyanat-Mischung bestimmt. Typischerweise beträgt diese Zeit 0,3 bis 6 Sekunden, vorzugsweise 2 bis 4 Sekunden.

Die Unterschreitung des Gleichgewichtslösungsdruckes zwischen der ersten und zweiten Druckreduktion soll vorzugsweise weniger als 5 %, besonders bevorzugt weniger als 3 %, insbesondere bevorzugt weniger als 2 %, des Gleichgewichtslösungsdruckes betragen. In diesem Falle bleiben die Blasenkeimdurchmesser auch für den Fall der Einstellung eines Gleichgewichtes deutlich unter 100 µm, so dass eine Koagulation von Blasenkeimen im wesentlichen nicht erfolgt.

Typischerweise soll demgemäss bei einer Polyol-Isocyanat-Mischung, die 4 Gew.-Teile Kohlendioxid auf 100 Gew.-Teile Polyol enthält und deren Gleichgewichtslösungsdruck etwa 5 bar beträgt, der Gleichgewichtslösungsdruck um weniger als 0,1 bar über- oder unterschritten werden. Schwankungen ergeben sich aus der unterschiedlichen Kohlendioxid-Löslichkeit in unterschiedlichen Rohstoffqualitäten sowie spezifischen apparativen Gegebenheiten.

Ein wesentliches Merkmal der vorliegenden Erfindung ist demgemäss eine sensible Einstellung und Einhaltung des Druckes der Polyol-Isocyanat-Mischung zwischen der ersten und zweiten Druckreduktion. Hierfür stehen eine Reihe von Möglichkeiten zur Verfügung: Eine Möglichkeit besteht darin, die Einhaltung des Gleichgewichtslösungsdruckes über das Druckreduktionsorgan der ersten Druckreduktion einzustellen. Ferner besteht die Möglichkeit, die Mengenströme der Komponenten so einzustellen, dass bei vorhandenen apparativen Gegebenheiten der Gleichgewichtslösungsdruck zwischen erster und zweiter Druckreduktion gewährleistet wird. Bevorzugt wird der Gleichgewichtslösungsdruck durch Einsatz eines Druckreduktionsorgans mit variablem Druckhaltevermögen für die zweite Druckreduktion gewährleistet.

Gegenstand der Erfindung ist auch ein Druckhalteorgan für die Verschäumung von Kohlendioxid unter Druck gelöst enthaltenden, gegebenenfalls füllstoffhaltigen Polyol-Polyisocyanat-Mischungen, enthaltend an einem Gehäuseauslass quer zur Strömungsrichtung der Mischung zwei parallele Siebplatten, deren Abstand zueinander zwischen 0,1 und 0,3 mm regelbar ist, mit folgenden Merkmalen:
die Siebplatten weisen ein regelmäßiges Sieblochraster mit gleichem Rasterabstand auf,
wobei die beiden Raster um eine halbe Rasterperiode gegeneinander versetzt sind,
die Lochdichte der stromab gelegenen Siebplatte beträgt 1,5 und 5 pro cm²,
die freie Querschnittfläche der stromauf gelegenen Siebplatte beträgt zwischen 1,5 und 4 % bezogen auf den Gesamtquerschnitt der Siebplatten, und
die freie Querschnittsfläche der stromab gelegenen Siebplatte beträgt zwischen 10 und 30 % bezogen auf den Gesamtquerschnitt der Siebplatten.

Vorzugsweise wird das Druckhalteorgan durch zwei Siebplatten gebildet, die je ein drei- bzw. vierzähliges Sieblochraster aufweisen.

Weiter bevorzugt wird das Druckhalteorgan durch eine stromauf gelegene Siebplatte mit Sechseck-Lochraster und durch eine stromab gelegene Siebplatte mit Dreiecksiebraster gebildet, so dass die Lochdichte der stromauf gelegenen Siebplatte doppelt so hoch ist wie die stromab gelegene Siebplatte. "Stromauf' bzw. "stromab" bezieht sich jeweils auf den Abstandsspalt zwischen den Siebplatten.

Besonders bevorzugt weisen die Durchgangslöcher der stromab gelegenen Siebplatte in Strömungsrichtung konische Erweiterungen auf, insbesondere bevorzugt derart, dass der Siebplattenauslass, d.h. die Unterseite der Platte, aus scharfen Kanten gebildet wird, so dass keine Strömungsnester gebildet werden.

Die Erfindung wird nachfolgend anhand der Figuren näher erläutert.
- Fig. 1: zeigt schematisch eine Vorrichtung zur Durchführung des erfindungsgemäßen Verfahrens.
- Fig. 2: erläutert prinzipiell die Druck- und Konzentrationsverhältnisse bei der Durchführung des erfindungsgemäßen Verfahrens.
- Fig. 3: zeigt eine Darstellung des erfindungsgemäß einsetzbaren zweiten Druckreduktionselementes.
- Fig. 4: zeigt eine bevorzugte Ausführungsform des zweiten Druckreduktionselementes in detaillierter Form.

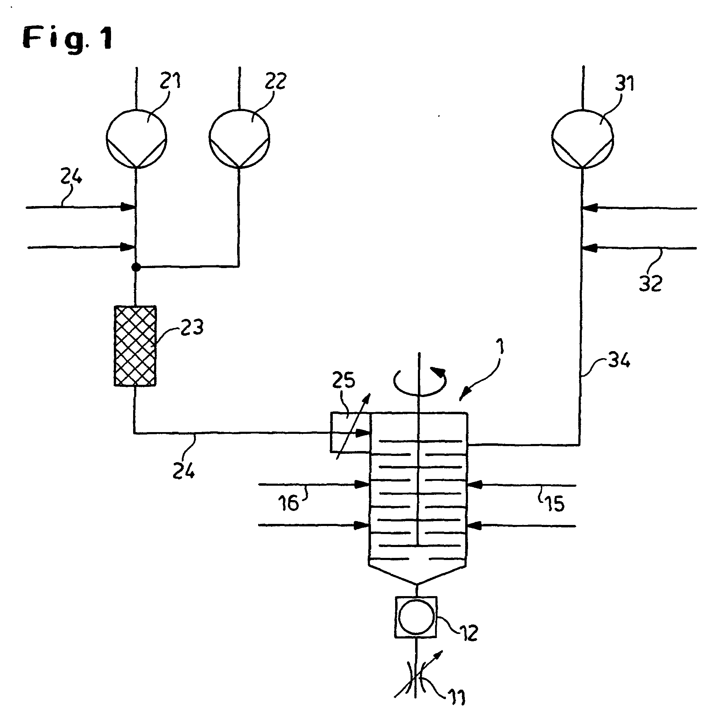

Fig. 1 zeigt ein Mischaggregat 1 zur Vermischung von Polyol und Isocyanat, das beispielhaft in Form eines Stachelmischers dargestellt ist. Dem Mischaggregat wird einerseits über Leitung 24 Polyol, das Kohlendioxid gelöst enthält, zugeführt. Das Polyol befindet sich auf einem Druck von mindestens dem 5-fachen Gleichgewichtslösungsdruck des gelösten Kohlendioxides, beispielsweise bei einem Druck von 30 bis 150 bar. Über das Druckreduktionsventil 25 wird das Polyol in das Mischaggregat unter Druckreduktion eingeleitet.

Die Lösung des Kohlendioxids im Polyol kann beispielsweise in einem statischen Mischer 23 erfolgen, dem über Pumpen 21 und 22 Polyol und flüssiges Kohlendioxid zugeführt werden. Das Polyol kann feinteilige Füllstoffe, wie beispielsweise Melaminharze, enthalten. Über Leitung 24 können dem Polyol Additive, wie beispielsweise Schaumstabilisatoren, zugeführt werden. Über Leitung 34 wird mittels Pumpe 31 Isocyanat in das Mischaggregat 1 eingeleitet. Ferner können über Leitungen 15 und 16 weitere Additive in die Mischkammer eingeleitet werden. Die nach Vermischung erhaltene Kohlendioxid-haltige Polyol-Isocyanat-Mischung wird anschließend durch das zweite Druckhalteorgan 11 auf Atmosphärendruck entspannt. Das Druckhalteorgan 11 gewährleistet den Druck im Mischaggregat 1. Dieser soll erfindungsgemäß etwa dem Gleichgewichtslösungsdruck des über Leitung 24 zugeführten Kohlendioxids in der Polyol-Isocyanat-Mischung entsprechen. Zur Druckregelung kann am Ausgang des Mischaggregates bzw. in dem Druckhalteorgan 11 eine Druckmessvorrichtung vorgesehen sein, so dass in Abhängigkeit von dem herrschenden Druck das Druckreduktionsventil 25 oder, wenn ein regelbares zweites Druckhalteorgan 11 eingesetzt wird, dieses zweite Druckhalteorgan geregelt werden. Alternativ oder zusätzlich zur Druckregelung kann ferner zwischen Mischaggregat 1 und dem zweiten Druckhalteorgan 11 ein Schauglas 12 vorgesehen sein, das es erlaubt, die Polyol-Isocyanat-Mischung zu beobachten. Vorzugsweise soll die Polyol-Isocyanat-Mischung eine leichte Trübung durch Schaumbläschen aufweisen, die durch weniger als vorzugsweise 2 % des gelösten Kohlendioxids gebildet sind. Das Schauglas 12 besteht vorzugsweise aus zwei parallelen Glasplatten, zwischen denen die Kohlendioxid-haltige Polyol-Isocyanat-Mischung hindurchströmt. Durch Beleuchtung auf einer Seite kann das Streulicht auf der anderen Seite durch einen Fotodetektor gemessen werden und das Messsignal zur Steuerung der Druckhalteorgane 25 und/oder 11 herangezogen werden.

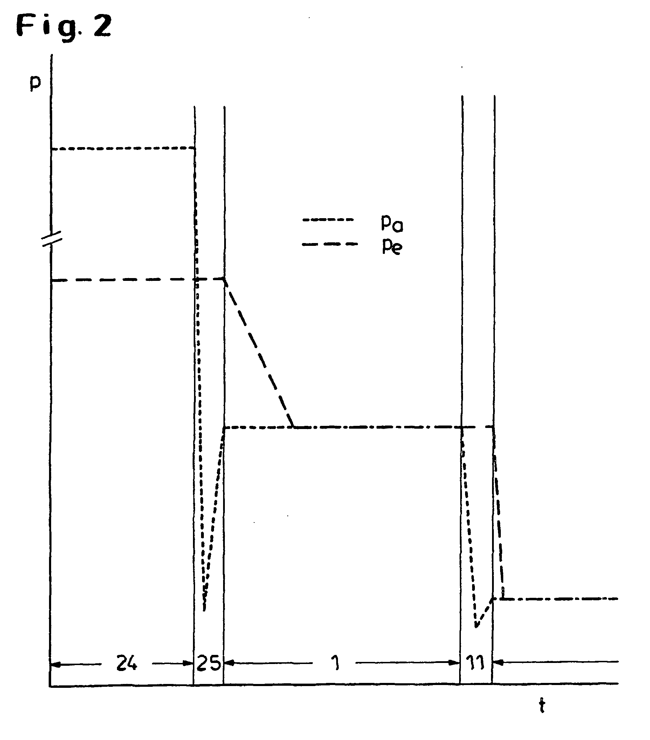

Fig. 2 erläutert qualitativ den Druckverlauf beim Durchgang durch die erfindungsgemäße Vorrichtung. Die punktierte Linie gibt den aktuellen Druck Pa in den verschiedenen Elementen der Vorrichtung (Bezugszeichen wie in Fig. 1) an. Die strichlierte Linie gibt den Gleichgewichtslösungsdruck Pe für das gelöste Kohlendioxid an. In Leitung 24 herrscht ein aktueller Druck, der mindestens das 5-fache des Gleichgewichtslösungsdruckes beträgt. Das Kohlendioxid-haltige Polyol wird aus der Leitung 24 durch das Druckreduktionsorgan 25 in die Mischkammer 1 eingedüst. Aufgrund der hohen Geschwindigkeit durch die Düse 25 wird der Druck kurzzeitig sehr stark unter den Gleichgewichtslösungsdruck abgesenkt, wobei eine Vielzahl von Blasenkeimen erzeugt wird. Innerhalb der Mischkammer 1 soll erfindungsgemäß der aktuelle Druck etwa dem Gleichgewichtslösungsdruck entsprechen. Dieser liegt entsprechend der Verdünnung der Kohlendioxidkonzentration aufgrund der Vermischung mit dem Isocyanat etwa um einen Faktor 1,5 bis 1,8 niedriger als der Gleichgewichtslösungsdruck in Leitung 24. Da das Kohlendioxid-haltige Polyol beim Eintritt in das Mischaggregat noch nicht mit dem Isocyanat vermischt ist, liegt der Gleichgewichtslösungsdruck bis zur Vermischung oberhalb des aktuellen Druckes, so dass in der Düse 25 erzeugte Keimblasen zunächst wachsen können, bis diese einen Durchmesser von oberhalb beispielsweise 10 µm aufweisen. Beim Durchgang durch das zweite Druckentspannungselement 11 fällt der aktuelle Druck aufgrund der Strömungsgeschwindigkeit kurzzeitig stark ab und erreicht nach dem Durchgang durch das Druckhalteorgan 11 Atmosphärendruck, wobei der Hauptteil des noch gelösten Kohlendioxids freigesetzt wird. Erfindungsgemäß wesentlich ist, dass der in der Mischkammer 1 herrschende Druck etwa dem Gleichgewichtslösungsdruck des gelösten Kohlendioxids in der Polyol-Isocyanat-Mischung entspricht. Die Druckabweichung vom Gleichgewichtslösungsdruck nach oben soll so gering sein, dass die in dem Druckreduktionsventil 25 erzeugten Keimblasen bis zum Durchgang der Mischung durch das Druckhalteorgan 11 nicht wieder aufgelöst werden, und andererseits soll der aktuelle Druck so wenig unterhalb des Gleichgewichtslösungsdruckes liegen, dass nicht mehr als vorzugsweise 2 % des gelösten Kohlendioxids freigesetzt werden.

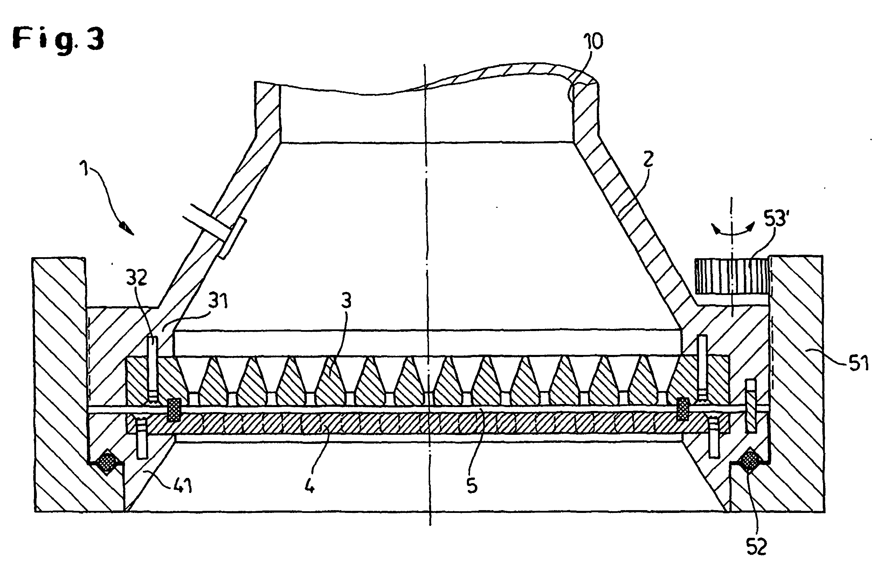

Fig. 3 zeigt ein erfindungsgemäß bevorzugt einsetzbares Druckhalteorgan mit einstellbarem Druckhaltevermögen. Dieses besteht aus einem Gehäuse 2 im Anschluss an die Zuleitung 10 von dem Mischaggregat. In dem Gehäuse 2 sind eine obere Siebplatte 3 und eine untere Siebplatte 4 angeordnet, wobei sich zwischen den Siebplatten ein einstellbarer Spalt 5 befindet. Durch die Einstellung der Höhe des Spaltes 5 wird der Strömungsquerschnitt von den Bohrungen der Siebplatte 3 zu den Bohrungen der Siebplatte 4 und damit das Druckhaltevermögen verändert. Dem Fachmann ist eine Vielzahl von Möglichkeiten geläufig, wie die Veränderung der Höhe des Spaltes 5 realisiert werden kann. In der beispielhaft gezeigten Darstellung ist die obere Siebplatte 3 mit dem Gehäuseteil 31 mittels Schrauben 32 flüssigkeitsdicht verschraubt. Die untere Siebplatte 4 ist mit dem Haltering 41 über Schrauben 42 verschraubt. Der Haltering 41 wird mittels Flansch 51, der mit dem Gehäuse 2 verschraubt ist, gehalten. Der Flansch 51 ist vermöge der Kugel- bzw. Walzenlager 52 gegen den Haltering 41 drehbar, wobei durch Verdrehen des Flansches 51 die Höhe des Spaltes 5 verändert wird. Die Veränderung der Höhe des Spaltes 5 kann durch einen am Flansch 51 angreifenden elektrischen Antrieb 53 bewirkt werden.

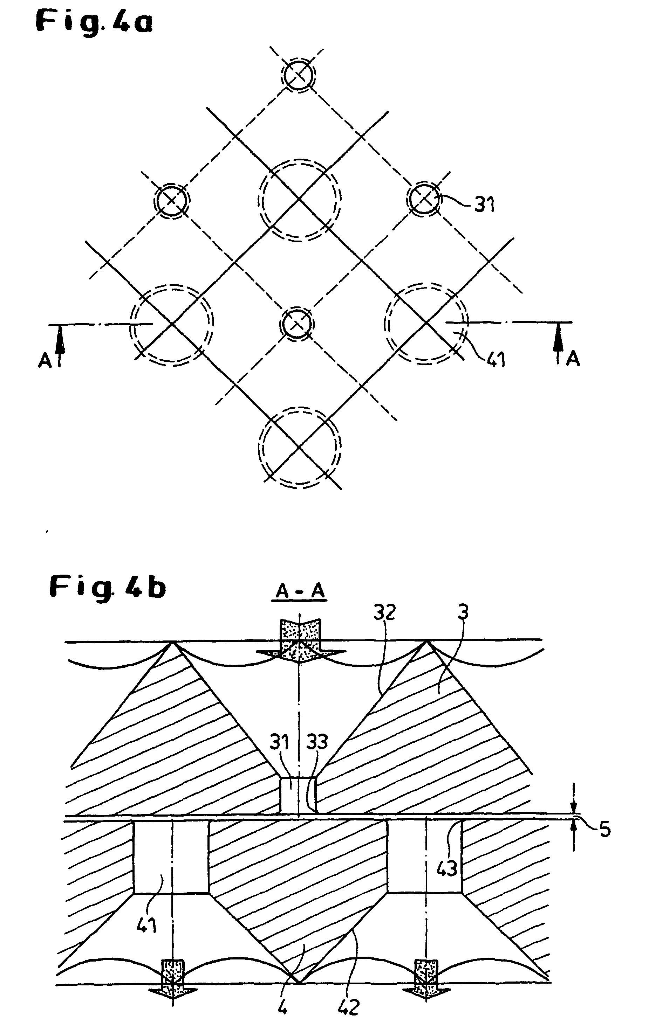

Fig. 4 zeigt in größerem Detail einen Abschnitt aus den Siebplatten 3 und 4 gemäß Fig. 3. Dabei zeigt Fig. 4a eine Aufsicht auf die Siebplatten in axialer Richtung und Fig. 4b einen Schnitt A-A durch Fig. 4a. Die obere und untere Siebplatte 3 und 4 weisen jeweils in einem regelmäßigen Raster angeordnete Bohrungen 31 bzw. 41 auf, wobei die beiden Lochraster um eine halbe Rasterperiode versetzt sind. Dargestellt ist ein bevorzugtes quadratisches Raster. Die Lochdichte beider Raster soll etwa 1,5 bis 4 Löcher pro cm² betragen. Die offene Querschnittsfläche der oberen Siebplatte 3, d.h. der freie Querschnitt aller Bohrungen 31, beträgt vorzugsweise 1,5 bis 4 % der Gesamtfläche der Siebplatte. Die freie Durchtrittsfläche der unteren Siebplatte, d.h. die Summe der Bohrungen 41, beträgt vorzugsweise 12 bis 30 % bezogen auf den Gesamtquerschnitt der Siebplatten. Der Spalt 5 zwischen den Siebplatten ist vorzugsweise zwischen einer Spalthöhe von 0,1 bis 0,3 mm verstellbar.

Vorzugsweise sind die Bohrungen 41 zur Austrittsseite des Polyol-Isocyanat-Kohlendioxid-Gemisches hin konisch aufgebohrt, insbesondere bevorzugt konisch überlappend derart aufgebohrt, dass unterhalb der Platte keine Strömungsnester entstehen können.

Weiter bevorzugt weisen die Bohrungen 31 und 41 auf ihrer jeweils dem Spalt 5 zugewandten Seite Abkantungen 33 bzw. 43 auf, die den Eintritt bzw. den Austritt der Polyol-Isocyanat-Kohlendioxid-Mischung begünstigen.

Bevorzugt entspricht die Abkantung 33 des stromauf gelegenen Siebplatte einem Rundungsradius von 0,2 - 0,5 mm.

Typischerweise kann der Durchsatz an Polyol-Isocyanat-Kohlendioxid-Mischung durch die Siebplatten derart gewählt werden, bzw. die Größe der Siebplatten in Bezug auf einen vorgegebenen Durchsatz so gewählt werden, dass die Geschwindigkeit beim Durchtritt durch die Bohrungen 41 der unteren Siebplatte 4 zwischen 1 und 3 m/sec liegt.

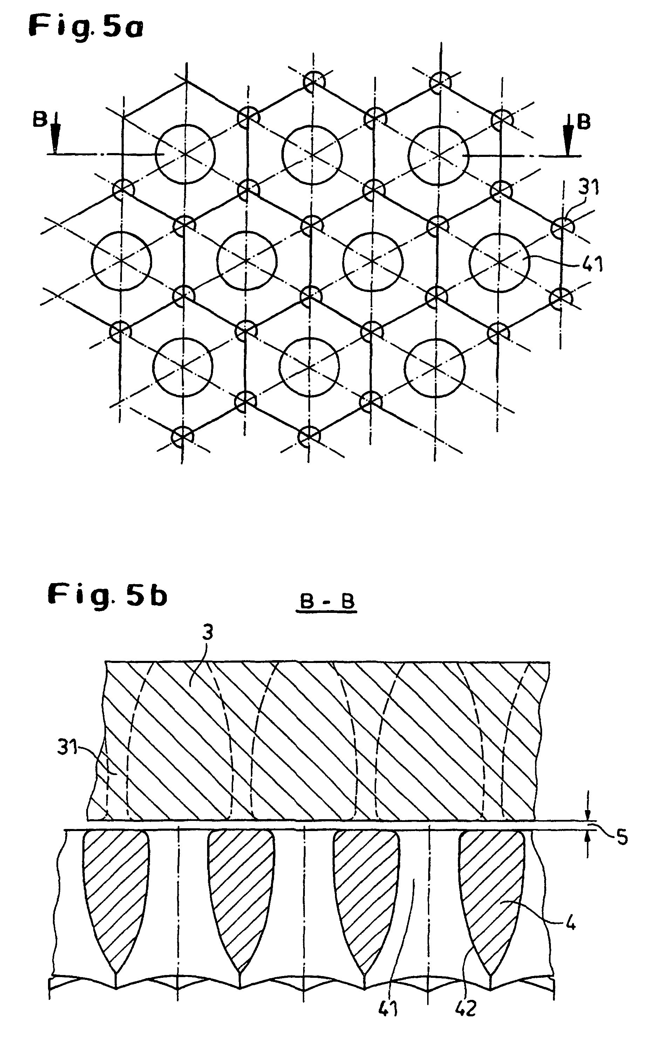

Fig. 5 zeigt eine weitere bevorzugte Ausführungsform der Siebplatten des erfindungsgemäßen regelbaren Druckhalteorgans. Die obere Siebplatte 3 weist ein regelmäßiges sechseckiges Lochraster mit Bohrungen 31 auf. Die untere Siebplatte 4 weist ein regelmäßiges dreizähliges Lochraster mit gleicher Rasterperiode mit Bohrungen 41 auf.

Die beiden Siebplatten sind so zueinander angeordnet, dass die Lochraster um eine halbe Rasterperiode gegeneinander versetzt sind, so dass jedes Abströmloch 41 von 6 Zuströmlöchern 31 zum Spalt 5 umgeben ist. Hierdurch wird eine gleichmäßigere Anströmung des Abströmloches 41 in Spalt 5 erreicht.

## Patentansprüche

1. Verfahren zur Herstellung von Polyurethan-Blockschaum wobei eine Kohlendioxid enthaltende Polyurethan-Reaktivmischung plötzlich von einem Druck oberhalb des Gleichgewichtslösungsdruckes des Kohlendioxids auf Normaldruck entspannt wird, wobei die flüssige Polyurethan-Reaktivatischung unter Freisetzung von gelöstem Kohlendioxid aufschäumt, die aufgeschäumte Mischung auf ein Substrat aufgebracht wird und anschließend zum Blockschaum ausgehärtet wird, **dadurch gekennzeichnet, dass** das Kohlendioxid zunächst bei einem Druck, der oberhalb des 5-fachen Gleichgewichtslösungsdruckes liegt, in der Reaktivmischung oder mindestens einer der Komponenten Polyol und Isocyanat vollständig gelöst wird, der Druck anschließend auf einen Druck herabgesetzt wird, der den Gleichgewichtslösungsdruck weniger als Δp in bar gleich 0,5/t übersteigt, wobei t die Zeit in Sekunden zwischen der ersten und zweiten Druckherabsetzung bezeichnet, wobei zwischenzeitlich der Gleichgewichtslösungsdruck unter Freisetzung geringer Mengen des Kohlendioxids unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlendioxid wieder vollständig aufgelöst wird.

2. Verfahren nach Anspruch 1 **dadurch gekennzeichnet, dass** die erste Druckherabsetzung von dem Druck oberhalb des 5-fachen Gleichgewichtslösungsdruckes auf den Druck, der den Gleichgewichtslösungsdruck weniger als Δp in bar gleich 0,5/t übersteigt, wobei t die Zeit in Sekunden zwischen der ersten und zweiten Druckherabsetzung bezeichnet, mittels einer Düse unter Erzeugung hoher Strömungs- und Schergeschwindigkeiten erfolgt.

3. Verfahren nach Anspruch 2, **dadurch gekennzeichnet, dass** die Düse als regelbare Ringschlitzdüse (Nadelventil) ausgebildet ist.

4. Verfahren nach einem der Ansprüche 1 bis 3, **dadurch gekennzeichnet, dass** das Kohlendioxid unter hohem Druck in der Polyolkomponente gelöst wird, die Polyolkomponente in ein Mischaggregat zur Vermischung mit der Isocyanatkomponente unter Druckverminderung auf den Druck, der den Gleichgewichtslösungsdruck weniger als Δp in bar gleich 0,5/t übersteigt, wobei t die Zeit in Sekunden zwischen der ersten und zweiten Druckherabsetzung bezeichnet, in der Reaktivmischung eingedüst wird und die Reaktivmischung nach Verlassen des Mischaggregates auf Normaldruck entspannt wird.

5. Verfahren nach einem der Ansprüche 1 bis 4, **dadurch gekennzeichnet, dass** der Zeitraum zwischen der ersten Druckherabsetzung und der zweiten Druckherabsetzung 0,3 bis 6 Sekunden beträgt.

6. Verfahren nach einem der Ansprüche 1 bis 5, **dadurch gekennzeichnet, dass** der Druck den Gleichgewichtslösungsdruck um weniger als 5 % unterschreitet.

7. Verfahren nach einem der Ansprüche 1 bis 6, **dadurch gekennzeichnet, dass** der Druck vor der zweiten Druckherabsetzung gemessen und geregelt wird.

8. Verfahren nach Anspruch 7, **dadurch gekennzeichnet, dass** die Regelung des Druckes vor der zweiten Druckentspannung durch Regelung der Komponentenmengenströme erfolgt.

9. Verfahren nach Anspruch 7, **dadurch gekennzeichnet, dass** die Druckherabsetzung auf Normaldruck in einem Druckhalteorgan mit (bezogen auf konstanten Mengenstrom) regelbarem Druckhaltevermögen erfolgt und die Druckregelung vor der zweiten Druckherabsetzung durch Regelung des Druckhaltevermögens des Druckhalteorgans erfolgt.

10. Verfahren nach einem der Ansprüche 1 bis 9, **dadurch gekennzeichnet, dass** die Reaktivmischung feinteilige Füllstoffe enthält.

11. Druckhalteorgan für die Verschäumung von Kohlendioxid unter Druck gelöst enthaltenden gegebenenfalls füllstoffhaltigen Polyol-Polyisocyanat-Mischungen enthaltend an einem Gehäuseauslaß quer zur Strömungsrichtung der Mischung zwei parallele Siebplatten, deren Abstand zueinander zwischen 0,1 und 0,3 mm regelbar ist, mit folgenden Merkmalen:
die Siebplatten weisen ein regelmäßiges Sieblochraster mit gleichem Rasterabstand auf,
wobei die beiden Raster um eine halbe Rasterperiode gegeneinander versetzt sind,
die Lochdichte der stromab gelegenen Siebplatte beträgt 1,5 und 5 pro cm²,
die freie Querschnittfläche der stromauf gelegenen Siebplatte beträgt zwischen 1,5 und 4 % bezogen auf den Gesamtquerschnitt der Siebplatten, und
die freie Querschnittsfläche der stromab gelegenen Siebplatte beträgt zwischen 10 und 30 % bezogen auf den Gesamtquerschnitt der Siebplatten.

12. Druckhalteorgan nach Anspruch 11, wobei die Durchgangslöcher der Siebplatten zum Abstandspalt hin entkantet sind.

13. Druckhalteorgan nach Anspruch 12, wobei die Entkantung der stromauf gelegenen Siebplatte einem Rundungsradius von 0,2 bis 0,5 mm entspricht.

14. Druckhalteorgan nach einem der Ansprüche 11 bis 13, wobei die Sieblochbohrungen der stromab gelegenen Siebplatte auf der druckfreien Seite konisch überlappend erweitert sind.

15. Druckhalteorgan nach einem der Ansprüche 11 bis 14, wobei beide Siebplatten ein drei- bzw. vierzähliges Siebhochraster mit gleicher Zähligkeit aufweisen.

16. Druckhalteorgan nach einem der Ansprüche 11 bis 14, wobei die stromauf gelegene Siebplatte ein Sechseck-Lochraster und die stromab gelegene Siebplatte ein Dreieck-Lochraster aufweist.

## Claims

1. Process for the production of polyurethane block foam, wherein a polyurethane reactive mixture containing carbon dioxide is suddenly expanded from a pressure above the equilibrium solution pressure of the carbon dioxide to normal pressure, the liquid polyurethane reactive mixture foams with the release of dissolved carbon dioxide, and the foamed mixture is applied to a substrate and then cured to form block foam, **characterized in that** the carbon dioxide is initially completely dissolved in the reactive mixture, or in at least one of the components polyol and isocyanate, at a pressure more than 5 times the equilibrium solution pressure, the pressure is then reduced to a value which exceeds the equilibrium solution pressure by less than a value Δp of 0.5/t bar, where t is the time in seconds between the first and second pressure reductions, falling in the meantime below the equilibrium solution pressure with the release of small amounts of carbon dioxide to form a bubble microdispersion, the components are mixed, if appropriate, and the pressure is suddenly reduced to normal pressure before the released carbon dioxide is completely redissolved.

2. Process according to Claim 1, **characterized in that** the first pressure reduction from the pressure more than 5 times the equilibrium solution pressure to the pressure which exceeds the equilibrium solution pressure by less than a value Δp of 0.5/t bar, where t is the time in seconds between the first and second pressure reductions, is effected by means of a nozzle to produce a high speed of flow and a high shear rate.

3. Process according to Claim 2, **characterized in that** the nozzle is designed in the form of an adjustable annular slotted nozzle (needle valve).

4. Process according to any one of Claims 1 to 3, **characterized in that** the carbon dioxide is dissolved in the polyol component under high pressure, the polyol component is injected into a mixing unit for mixing with the isocyanate component, the pressure being reduced to the pressure which exceeds the equilibrium solution pressure by less than a value Δp of 0.5/t bar, where t is the time in seconds between the first and second pressure reductions, in the reactive mixture, and the reactive mixture is expanded to normal pressure after leaving the mixing unit.

5. Process according to any one of Claims 1 to 4, **characterized in that** the time between the first pressure reduction and the second pressure reduction is 0.3 to 6 seconds.

6. Process according to any one of Claims 1 to 5, **characterized in that** the pressure falls below the equilibrium solution pressure by less than 5%.

7. Process according to any one of Claims 1 to 6, **characterized in that** the pressure is measured and regulated before the second pressure reduction.

8. Process according to Claim 7, **characterized in that** the pressure is regulated before the second pressure expansion by adjusting the mass fluxes of the components.

9. Process according to Claim 7, **characterized in that** the pressure reduction to normal pressure is effected in a pressure-maintaining device with adjustable pressure-maintaining capacity (based on a constant mass flux) and the pressure is regulated before the second pressure reduction by adjusting the pressure-maintaining capacity of the pressure-maintaining device.

10. Process according to one of Claims 1 to 9, **characterized in that** the reactive mixture contains finely divided fillers.

11. Pressure-maintaining device for the foaming of polyol/polyisocyanate mixtures containing carbon dioxide dissolved under pressure, and optionally containing fillers, said device comprising, at a housing outlet transverse to the direction of flow of the mixture, two parallel perforated plates whose separation is adjustable between 0.1 and 0.3 mm and which have the following features:
the perforated plates have a uniform perforation grid of constant pitch,
the two grids being offset by half a period relative to one another,
the hole density of the downstream perforated plate is between 1.5 and 5 per cm²,
the free cross-sectional area of the upstream perforated plate is between 1.5 and 4%, based on the total cross-section of the perforated plates, and
the free cross-sectional area of the downstream perforated plate is between 10 and 30%, based on the total cross-section of the perforated plates.

12. Pressure-maintaining device according to Claim 11 wherein the through-holes in the perforated plates have bevelled edges towards the separation gap.

13. Pressure-maintaining device according to Claim 12 wherein the edge bevelling of the upstream perforated plate corresponds to a radius of curvature of 0.2 to 0.5 mm.

14. Pressure-maintaining device according to any one of Claims 11 to 13 wherein the drilled holes in the downstream perforated plate are enlarged with an overlapping conical shape on the pressure-free side.

15. Pressure-maintaining device according to any one of Claims 11 to 14 wherein the two perforated plates both have either a trilateral or a quadrilateral perforation grid.

16. Pressure-maintaining device according to any one of Claims 11 to 14 wherein the upstream perforated plate has a hexagonal perforation grid and the downstream perforated plate has a triangular perforation grid.

## Revendications

1. Procédé de fabrication de mousse de polyuréthanne en panneau, un mélange réactif de polyuréthanne qui renferme du dioxyde de carbone subissant brusquement une détente à partir d'une pression au-dessus de la pression de solution d'équilibre du dioxyde de carbone, jusqu'à la pression normale, le mélange réactif liquide de polyuréthanne moussant en libérant du dioxyde de carbone dissous, le mélange moussé étant appliqué sur un substrat et étant ensuite durci en un panneau de mousse, **caractérisé en ce que** le dioxyde de carbone est tout d'abord totalement dissous, à une pression qui se situe au-dessus de 5 fois la pression de solution d'équilibre, dans le mélange réactif ou au moins l'un des composants polyol et isocyanate, **en ce que** l'on abaisse ensuite la pression à une pression qui ne dépasse la pression de solution d'équilibre que de moins de Δp en bar égale à 0,5/t, t étant le temps en secondes entre le premier et le second abaissement de pression, la pression étant entre temps abaissée sous la pression de solution d'équilibre avec libération de faibles quantités de dioxyde de carbone et formation d'une micro-dispersion de bulles, les composants étant éventuellement mélangés, et l'abaissement brusque de pression à la pression normale étant effectué avant que le dioxyde de carbone libéré soit à nouveau totalement dissous.

2. Procédé selon la revendication 1, **caractérisé en ce que** le premier abaissement de pression de la pression se situant 5 fois au-dessus de la pression de solution d'équilibre à la pression qui ne dépasse la pression de solution d'équilibre que de moins de Δp en bar égale à 0,5/t, t étant le temps en secondes entre le premier et le second abaissement de pression, est effectué au moyen d'une buse en produisant des vitesses élevées d'écoulement et de cisaillement.

3. Procédé selon la revendication 2, **caractérisé en ce que** la buse est réalisée en tant que buse à fente annulaire réglable (soupape à pointeau).

4. Procédé selon l'une des revendications 1 à 3, **caractérisé en ce que** le dioxyde de carbone est dissous sous haute pression dans le composant de polyol, le composant de polyol est injecté dans un appareil mélangeur pour être mélangé avec le composant isocyanate avec abaissement de pression à la pression qui ne dépasse la pression de solution d'équilibre dans le mélange réactif que de moins de Δp en bar égale à 0,5/t, t étant le temps en secondes entre le premier et le second abaissement de pression, et le mélange réactif est soumis à une détente jusqu'à la pression normale après avoir quitté l'appareil mélangeur.

5. Procédé selon l'une des revendications 1 à 4, **caractérisé en ce que** l'intervalle de temps entre le premier abaissement de pression et le second abaissement de pression, vaut de 0,3 à 6 secondes.

6. Procédé selon l'une des revendications 1 à 5, **caractérisé en ce que** la pression passe sous la pression de solution d'équilibre de moins de 5%.

7. Procédé selon l'une des revendications 1 à 6, **caractérisé en ce que** la pression avant le second abaissement de pression, est mesurée et régulée.

8. Procédé selon la revendication 7, **caractérisé en ce que** la régulation de la pression avant la seconde détente de pression, s'effectue par régulation des débits massiques des composants.

9. Procédé selon la revendication 7, **caractérisé en ce que** l'abaissement de pression à la pression normale est effectué dans un organe de maintien de pression avec une caractéristique de maintien de pression pouvant être régulée (relativement à un débit massique constant), et le régulation de pression avant le second abaissement de pression est effectuée par régulation de la caractéristique de maintien de pression de l'organe de maintien de pression.

10. Procédé selon l'une des revendications 1 à 9, **caractérisé en ce que** le mélange réactif renferme de fines particules de substances de charge.

11. Organe de maintien de pression pour faire mousser des mélanges de polyol-polyisocyanate contenant éventuellement des substances de charge, et renfermant du dioxyde de carbone dissous sous pression, comprenant au niveau d'une sortie de carter, transversalement à la direction d'écoulement du mélange, deux plaques perforées, parallèles, dont la distance d'espacement réciproque peut être réglée entre 0,1 et 0,3 mm, présentant les caractéristiques suivantes :
les plaques perforées présentent un maillage régulier de trous de perforation, avec une même valeur de maille de base,
les deux maillages étant mutuellement décalés d'une demi période du maillage,
la densité de trous de la plaque perforée disposée en aval vaut 1,5 à 5 par cm2,
l'aire de section libre de la plaque perforée disposée en amont, vaut entre 1,5 et 4% relativement à la section totale des plaques perforées, et
l'aire de section libre de la plaque perforée disposée en aval, vaut entre 10 et 30% relativement à la section totale des plaques perforées.

12. Organe de maintien de pression selon la revendication 11, les bords des trous de passage des plaques perforées étant chanfreinés en direction de l'interstice d'espacement des plaques.

13. Organe de maintien de pression selon la revendication 12, le chanfrein des bords de la plaque perforée disposée en amont correspondant à un rayon d'arrondi de 0,2 à 0,5 mm.

14. Organe de maintien de pression selon l'une des revendications 11 à 13, les trous de perforation de la plaque perforée disposée en aval, s'élargissant de manière conique en se chevauchant, sur le côté de la plaque exempt de pression.

15. Organe de maintien de pression selon l'une des revendications 11 à 14, les deux plaques perforées présentant un maillage de trous de perforation à trois ou respectivement à quatre trous, chacune avec le même nombre de trous de perforation.

16. Organe de maintien de pression selon l'une des revendications 11 à 14, la plaque perforée disposée en amont présentant un maillage hexagonal à six trous, et le plaque perforée disposée en aval, un maillage triangulaire à trois trous.
